# EUROPEAN PATENT APPLICATION

(11) **EP 2 733 659 A1**
(43) Date of publication of application: **21.05.2014**
(21) Application number: 13189693.8
(22) Date of filing: 22.10.2013
(51) Int. Cl.: G06Q 30/06, G06Q 50/00

(54) **Apparatus for sensing socially-related parameters at spatial locations and associated method**

(30) Priority: 16.11.2012 US 201213679319
(71) Applicant: Sankarimedia Oy, 00100 Helsinki (FI)
(72) Inventor: Jokela, Kristian, 00530 Helsinki (FI)
(74) Representative: Becker Kurig Straus

(57) **Abstract**

An apparatus (10, 120) is provided for sensing socially-related parameters at spatial locations, for example venues such as restaurants, clubs, bars. The apparatus (10, 120) includes at least one wireless communication device (10) accompanying an at least one corresponding user, wherein the at least one wireless communication device (10) is coupled in communication with a database arrangement (120). Moreover, the apparatus (10, 120) is operable to communicate spatial location characterizing parameters from the at least one wireless communication device (10) to the database arrangement (120) for further communication therefrom to one or more other users for providing the one or more other users with a subjective status (380) of spatial locations associated with the spatial location characterizing parameters (360). The wireless communication device (10) includes a sensor arrangement (50) and computing hardware (20, 120, 360) for analyzing the spatial location characterizing parameters (350) to compute the subjective status ("mood", "atmosphere").

## Description

### FIELD OF INVENTION

The present invention relates to apparatus for sensing socially-related parameters at spatial locations, for example to apparatus utilizing mobile wireless communication devices for sensing socially-related parameters at venues for providing users with an overview of socially-related parameters at the venues for helping to guide the users in their selection of venue. Moreover, the present invention concerns methods of using apparatus for sensing socially-related parameters at spatial locations, for example to methods of using apparatus utilizing mobile wireless communication devices for sensing socially-related parameters at venues for providing users with an overview of socially-related parameters at the venues for helping to guide the users in their selection of venue. Furthermore, the present invention relates to software products recorded on machine-readable data storage media, wherein the software products are executable upon computing hardware for implementing aforesaid methods.

### BACKGROUND

It is well known that people read reviews of various social venues, for example theatres, restaurants, night clubs, casinos and similar, before making a choice regarding which venue to visit. Proprietors of such social venues usually provide advertisement content describing their venues in a manner which is most tempting to people, for example via newspaper advertisements, travel guides, Internet web-sites, mobile advertisement feeds and so forth. However, such advertisement content is often not updated in real time, and thus is often not fully objective or representative. As a consequence, based upon such advertisement content, people will make efforts to attend social venues, only to be disappointed when their expectations are not fulfilled in reality.

Conventionally, a problem of selecting a venue for an enjoyable night out has been addressed by employing event calendars or by "word of mouth", for example by way of an oral recommendation or other type of message sent via a communication network, for example by sending an SMS via a mobile communication device such as a smart phone.

In a published United States patent application no. US2007/0179792A! ("*Svstem for providing a service to venues where people aggregate*", Inventor: James Frederick Kramer), there is described a system and method for providing a service to promoters, including venues and advertising sponsors, who are desirous to provide promotions. The service includes making promoter promotions accessible by the mobile telephones of members associated with an organization. For example, in the service, a promotion and a member are matched based on the member's geographical position, as determined automatically by a position sensor included in their mobile telephones, and by the members' traits and behaviours. By accepting a promotion, a member receives reward points, which can be used for obtaining goods and services. In addition to accessing promotions, members are providing with access to real-time information about the venues, for example demographics of venue attendees and media posted by attendees concerning venue characteristics. By using the system, members can determine *a priori* which venue, for example a nightclub or bar, has their preferred type of attendee. However, the system and method relies on the members entering information via their mobile telephones, which can be difficult to achieve if the members are intoxicated or occupied in various amorous activities for example.

In a published article "CenceMe - Injecting Sensing Presence into Social Network Application", by author Emiliano Miluzzo et al. (EuroSSC 2007, LNCS 4793, pp. 1 - 28, 2007), there is described configuring a mobile telephone to send information indicative of surroundings to a social network, for example the information indicative of the surrounds includes noise level at the surroundings. However, such information is generally not representative of "mood" or "atmosphere" experienced by people present at a given venue.

### SUMMARY

The present invention seeks to provide an apparatus for automatically sensing socially-related parameters at spatial locations, for example venues, which can indicate a subjective "mood" or "atmosphere" present at a given time at the venues.

The present invention seeks to provide a method of automatically sensing socially-related parameters at spatial locations, for example venues, which can indicate a "mood" or "atmosphere" present at a given time at the venues.

According to a first aspect of the present invention, there is provided an apparatus as claimed in appended claim 1: there is provided an apparatus for sensing socially-related parameters at spatial locations, wherein the apparatus includes at least one wireless communication device accompanying an at least one corresponding user, wherein the at least one wireless communication device is coupled in communication with a database arrangement, wherein the apparatus is operable to communicate spatial location characterizing parameters from the at least one wireless communication device to the database arrangement for further communication therefrom to one or more other users for providing the one or more other users with a subjective status of spatial locations associated with the spatial location characterizing parameters, **characterized in that** the at least one wireless communication device includes a sensor arrangement for automatically generating signals from which the spatial location characterizing parameters are computed, and the apparatus includes computing hardware for analyzing the spatial location characterizing parameters to compute the subjective status ("mood", "atmosphere") of the spatial locations to be communicated to the one or more other users.

The present invention is of advantage in that the apparatus is capable of automatically, or at least semi-automatically, computing and communicating the subjective status ("mood", "atmosphere") of the spatial locations in an efficient and unobtrusive manner.

Optionally, in respect of the apparatus, the at least one wireless communication device includes computing hardware which is operable to execute one or more software products, and wherein the computing hardware is thereby operable to generate the spatial location characterizing parameters from the signals generated by the sensor arrangement, wherein the spatial location characterizing parameters are anonymous in respect of the signals generated by the sensor arrangement.

More optionally, in respect of the apparatus, the computing hardware is operable to sample the signals generated by the sensor arrangement in a temporarily intermittent manner for achieving anonymity in the spatial location characterizing parameters.

More optionally, in respect of the apparatus, the computing hardware of the at least wireless communication device is operable to generate the spatial location characterizing parameters by applying one or more stages of Fourier analysis to the signals generated by the sensor arrangement.

Optionally, in respect of the apparatus, the subjective status ("mood", "atmosphere") of the spatial locations to be communicated to the one or more other users is computed from the spatial location characterizing parameters by employing an analysis engine based upon a neural network and/or a rule-based analysis.

More optionally, in respect of the apparatus, the rule-based analysis is implemented by correlation of the spatial location characterizing parameters with one or more signal templates which have been *a priori* attributed with corresponding subjective status ("mood", "atmosphere").

Optionally, in respect of the apparatus, the at least one wireless communication device includes a graphical user interface coupled to computing hardware of the at least one wireless communication device, wherein the computing hardware is operable to present in operation one or more maps on the graphical user interface for user viewing, wherein one or more subjective status ("mood", "atmosphere") of spatial locations represented in the one or more maps are shown on or via the one or more maps.

Optionally, in respect of the apparatus, the signals generated from the sensor arrangement are representative of motion sensor signals and/or acoustic sensor signals and/or image sensor signals.

According to a second aspect of the invention, there is provided a method of sensing socially-related parameters at spatial locations, wherein the method employs at least one wireless communication device accompanying an at least one corresponding user, wherein the at least one wireless communication device is coupled in communication with a database arrangement, wherein the method includes:
(a) communicating spatial location characterizing parameters from the at least one wireless communication device to the database arrangement for further communication therefrom to one or more other users for providing the one or more other users with a subjective status of spatial locations associated with the spatial location characterizing parameters,
   **characterized in that** the method further includes:
(b) using a sensor arrangement of the at least one wireless communication device for automatically generating signals and computing therefrom the spatial location characterizing parameters; and
(c) using computing hardware for analyzing the spatial location characterizing parameters to compute the subjective status ("mood", "atmosphere") of the spatial locations to be communicated to the one or more other users.

Optionally, the method includes using computing hardware of the at least one wireless communication device to execute one or more software products, thereby generating the spatial location characterizing parameters from the signals generated by the sensor arrangement, wherein the spatial location characterizing parameters are anonymous in respect of the signals generated by the sensor arrangement.

More optionally, the method includes using the computing hardware to sample the signals generated by the sensor arrangement in a temporarily intermittent manner for achieving anonymity in the spatial location characterizing parameters.

More optionally, the method includes using computing hardware of the at least wireless communication device to generate the spatial location characterizing parameters by applying one or more stages of Fourier analysis to the signals generated by the sensor arrangement.

Optionally, in respect of the method, the subjective status ("mood", "atmosphere") of the spatial locations to be communicated to the one or more other users is computed from the spatial location characterizing parameters by employing an analysis engine based upon a neural network and/or a rule-based analysis.

More optionally, in respect of the method, the rule-based analysis is implemented by correlation of the spatial location characterizing parameters with one or more signal templates which have been *a priori* attributed with corresponding subjective status ("mood", "atmosphere").

Optionally, the method includes using a graphical user interface coupled to computing hardware of the at least one wireless communication device, wherein the computing hardware is operable to present in operation one or more maps on the graphical user interface for user viewing, wherein one or more subjective status ("mood", "atmosphere") of spatial locations represented in the one or more maps are shown on or via the one or more maps.

Optionally, in respect of the method, the signals generated from the sensor arrangement are representative of motion sensor signals and/or acoustic sensor signals and/or image sensor signals.

According to a third aspect of the invention, there is provided a software product recorded on machine-readable data storage media, **characterized in that** the software product is executable upon computing hardware for executing a method pursuant to the second aspect of the invention.

More optionally, the software product is implemented as a software application which is downloadable to a wireless communication device.

It will be appreciated that features of the invention are susceptible to being combined in various combinations without departing from the scope of the invention as defined by the appended claims.

### DESCRIPTION OF THE DRAWINGS

Embodiments of the present invention will now be described, by way of example only, with reference to the following diagrams wherein:
FIG. 1 is an illustration of a wireless communication device for use when implementing the present invention;
FIG. 2 is an illustration of a map presented on a graphical user interface of the device of FIG.1 when implementing the present invention;
FIG. 3 is an illustration of information transfer in an example system arranged to implement the present invention; and
FIG. 4 is an illustration of processing steps employed in an example algorithm for implementing the present invention.

In the accompanying diagrams, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION

In overview, the present invention is concerned with an apparatus, for example conveniently referred to as a "party meter", which is operable to sense socially-related parameters at a given venue, namely parameters which enable, for example from interpretation implemented using a neural network or similar form of analysis based upon artificial intelligence, an "atmosphere and mood" of the given venue to be determined. The socially-related parameters include several metrics which are susceptible to being sensed via contemporary wireless communication devices including computing hardware, for example contemporary mobile telephones, such as contemporary smart telephones. Based on data sensed by the wireless communication devices at the given venue, and processed in computing hardware of the wireless communication devices pursuant to algorithms supplied to the wireless communication devices as software applications, the apparatus is operable to supply recommendations regarding which venues a given user might want to attend.

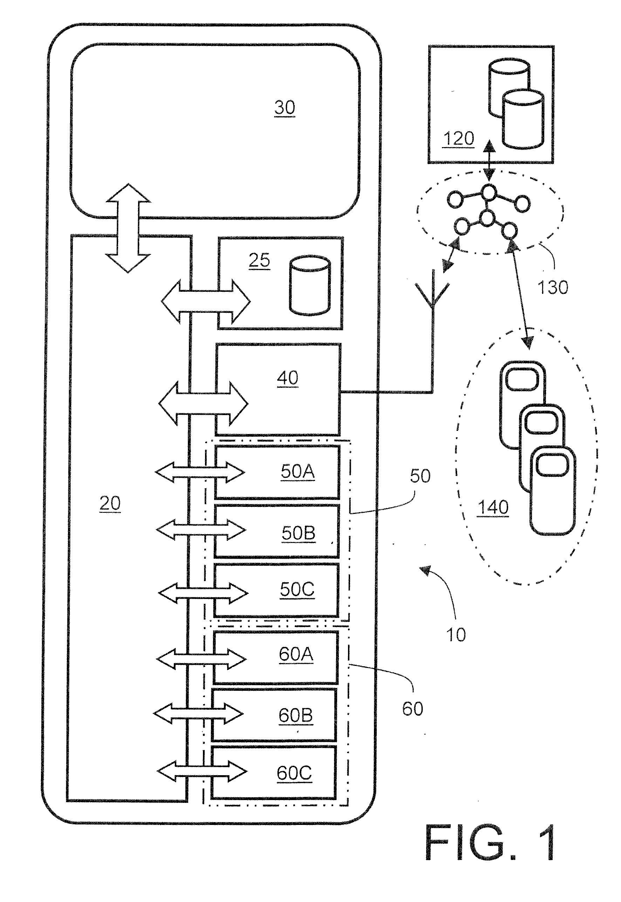

The aforesaid apparatus is capable of providing a "party meter" service which is, for example, of benefit to users who are customers of restaurants, discos, clubs, bars, public houses ("pubs"), casinos and similar. Referring to FIG. 1, a contemporary mobile wireless communication device indicated generally by **10** includes:
(i) computing hardware **20,** for example implemented using a RISC processor, with associated data memory **25** coupled thereto;
(ii) a graphical user interface **30,** for example implemented as a LED touch-screen, wherein the graphical user interface **30** is coupled to the computing hardware **20;**
(iii) a wireless interface **40,** for example for cell-net communication as well as near-field radio communication, for example BlueTooth ("*Blue Tooth*" is a trade mark), wherein the wireless interface **40** is coupled to the computing hardware **20;**
(iv) an arrangement of input sensors **50a, 50b, 50c** and so forth, for example a camera, a GPS sensor, an accelerometer, a rotation sensor, and a microphone, wherein the arrangement of input sensors **50** is coupled to the computing hardware **20;** and
(v) an arrangement of output transducers **60a, 60b, 60c** and so forth, for example a loudspeaker, a vibrator, wherein the arrangement of output transducers **60** is coupled to the computing hardware **20.**

The wireless communication device **10,** for example implemented as a smart telephone, is operable to execute one or more software applications stored in the data memory **25,** for example down-loaded from a remote server arrangement, for example an "App" store", via wireless communication through the wireless interface **40** and the computing hardware **20** to the data memory **25.** One or more of these software applications is operable, when executed upon the computing hardware **20,** to implement an embodiment of the present invention on the wireless communication device **10.**

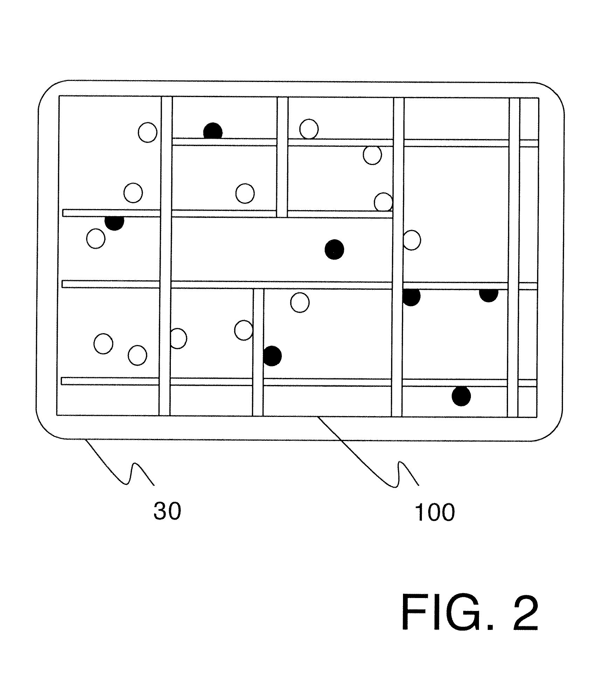

When implementing an embodiment of the present invention, a map is presented to a given user via the graphical user interface **30,** namely as indicated by **100** in FIG. 2. The map **100** provides a spatial representation of desirable venues. Data associated with the desirable venues which are processed by the one or more software applications executing upon the computing hardware **20** are beneficially stored in an external database **120,** and downloaded via a wireless communication network **130** to the wireless communication device **10** at temporal intervals, for example daily or more frequently. Information pertaining the desirable venues is optionally uploaded to the external database **120** by a community of users, by proprietors of the desirable venues, by service provides and/or by third parties, these being denoted by **140.** Information included in the map **100** is beneficially communicated via known social media systems, for example Facebook and similar to users; "*Facebook*" is a registered trademark. Via a user portal, proprietors and similar of the venues are able to upload their data to the external database **120** via a communication portal, for example accessible via a personal computer (PC) which is linked via the Internet to the external database **120.** The portal enables the proprietors to configure various types of advertisements which are presented to the given user via the map **100,** for example types of beer, alcohol, food, beverages, cabaret, music, comedy, bingo, roulette and such like.

In operation, the map **100** is updated in a dynamic manner as will now be described. On account of the wireless communication device **10,** for example implemented as a smart telephone, of the given user being equipped with the arrangement of input sensors **50,** for example GPS, the software application implementing the embodiment is operable when executed to cause the wireless communication device **10** to collect data at a given venue whereat its given user is spatially disposed, for example in a bar, a disco, a club. The software application is operable to enable the wireless communication device **10** to monitor to which venues the given user migrates, for example during a course of an evening "out in town". Determination of the venues visited is beneficially performed on a basis of location sensors included in the wireless communication device **10,** for example GPS, or WiFi identity of a wireless local area network which is installed at the venues.

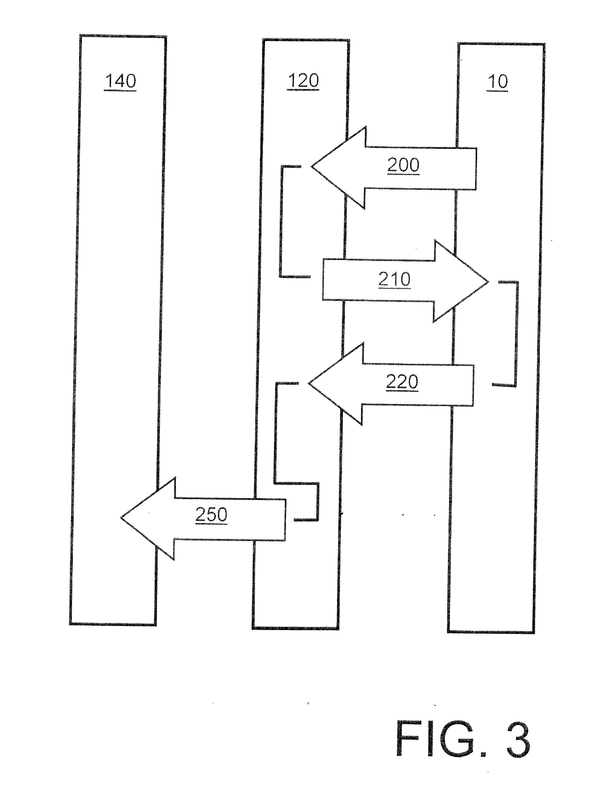

In a first mode of operation, referring to FIG. 3, the wireless communication device **10** sends information **200** to a service provider which provides the given user with a mapping service via the external database **120;** the information **200** concerns the given user bearing the wireless communication device **10** entering a given venue marked on the map **100.** On receipt of the information **200,** computing hardware at the external database **120** then sends information **210** concerning a number of people present at the given venue, such that the given user is informed immediately via the map **100** about a degree of people activity at the given venue. Next, the one or more software applications then cause the computing hardware **20** to receive audio signals generated by the microphone included amongst the arrangement of sensors **50** to measure sound level at the venue into which the given user has entered. Moreover, the one or more software applications cause the computing hardware **20** to implement algorithms which analyse the measured sound level and determine parameters which describe a "mood" or "atmosphere" of the venue. The determined parameters are then communicated as information **220** from the computing hardware **20** via the wireless interface **40** to the external database **120** so that the external database **120** receives in real-time a dynamically updated indication of the "mood" or "atmosphere" present at the venue. The algorithms employed here will be described in greater detail later. The parameters in the information **220** are processed to be anonymous so that conversations and such like occurring in a vicinity of the given user are not communicated to the external database **120.** The information **220** is then subsequently communicated from the external database **120** to other users whose wireless communication devices are provided with one or more software applications for implementing the present invention. Since some users prefer to frequent venues, for example pubs or bars, whereat many people are present, a loud noise with complex harmonic temporal variations is indicative of many people at the venues. Conversely, quite noise with simple harmonic content is generally indicative of venues having few people thereat. Users receiving the information **220** pertaining to a given venue via the external database **120** are able to receive on their maps **100** an indication of numbers of people present at various venues marked on their maps **100.**

In a second mode of operation, the one or more software applications executing on the computing hardware **20** of the wireless communication device **10** of the given user are operable to receive motion-indicative signals generated by accelerometers and similar motion sensors included amongst the arrangement of sensors **50.** The motion-indicative signals are indicative of what the given user is doing in respect of body motion, for example dancing, jiving, sitting tranquilly or similar. The one or more software applications are operable to cause the computing hardware **20** to implement algorithms for analysing the motion-indicative signals to generate motion parameters indicative of the venue which are then communicated as information **250** to the external database **120.** The information **250** is then communicated from the external database **120** to other user so that their maps **100** indicate whether or not venues shown on the map **100** are dancing-like venues and similar.

Parameters communicated via the external database **120** can be used to compute analyses regarding popularity of various venues which is potentially useful feedback information for proprietors of the venues. One or more wireless communication devices **10** arranged to execute one or more software applications to present the map **100** with its associated information regarding venues, the external database **120** and a communication network linking the one or more devices **10** and the external database **120** are beneficially regarded as a system for implementing the present invention. The system is operable to provide a mapping service which can provide analysis and associated feedback to one or more users:
(a) Is there a user at a given venue?
(b) What is a noise level present at a given venue?
(c) What kind of physical body movement pertains to users at the venues?
(d) Are there comments on social media networks, for example Facebook, regarding the venues?
As aforementioned, "*Facebook*" is a registered trade mark.

Beneficially, the external database **120** in possession of measurements represented in parameters from a plurality of venues is operable to compare the parameters received in respect of the venues and rank them, for example on a scale 1 to 4, for presentation on the map **100** to users. This allows the users to select, for example, the most "hip" places in town during a given evening.

Optionally, the aforementioned one or more software applications executable upon the computing hardware **20** of the user's wireless communication devices **10** also allow for manual user-input of the "mood" or "atmosphere" at given venues shown on the map **100.** Such manual user-input beneficially includes a progressive scale which is presented on the graphical user interface **30,** for example via pop-up window, wherein the user can input data via a quick finger-swiping motion.

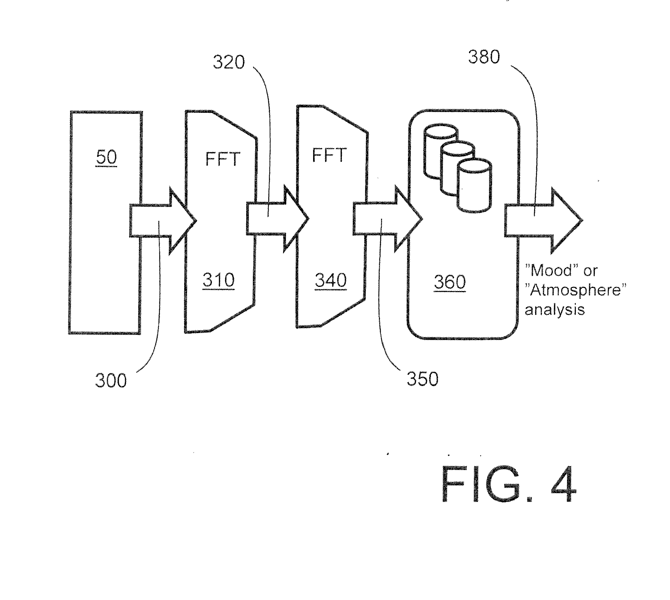

The aforesaid algorithms will now be described in greater detail with reference to FIG. 4. Signals **300** from the arrangement of sensors **50** are beneficially acquired by the computing hardware **20** at time intervals, for example 1 to 2 second duration signals samples acquired each 10 to 20 seconds. The signals **300** are subject to a first stage of frequency analysis **310,** for example implemented using a Fast Fourier Transform (FFT) algorithm, to generate harmonic component parameters **320.** Harmonic content at a given frequency in the signals **300** temporally varies. Each parameter **320** is then subject to a second stage **340** of frequency analysis, for example also implemented using a Fast Fourier Transform (FFT) algorithm, to generate further harmonic component parameters **350.** These further parameters **350** are then input to a neural network or adaptive rule-based analysis engine **360** which analyses the parameters **320** and matches them to different categories of activity having *a priori* defined "mood" or "atmosphere" characteristics as experienced subjectively by human beings, for example beforehand when programming or otherwise adjusting the neural network or analysis engine **360;** the analyzed "mood" or "atmosphere" is provided as analysis parameters **380** for communication via the remote database **120** to users via presentation on the map **100,** or via sub-fields accessible via the map **100,** for example by way of user swipe contact made upon the map **100** as displayed on the graphical user interface **30.** When the rule-based analysis is employed for the analysis engine **360,** analysis is beneficially performed by executing a correlation of the parameters **350** with reference parameter templates corresponding to different "moods" and "atmospheres" and a best match found therebetween. Optionally, the analysis engine **360** is implemented at the external database **120,** such that the parameters **350** are communicated from the wireless communication device **10** via its wireless interface **40** to the external database **120.** Optionally, the external database **120** is implemented by way of a cluster of data servers, "cloud computing" or similar implementation. Output **380** from the analysis engine **360** is a "mood" or "atmosphere" assessment which is stored at the external database **120** and then conveyed to the maps **100** of other users, for example for providing them with an indication of "mood" or "atmosphere" at various venues displayed on the map **100** to users. It will be appreciated that a major part of data processing employed in the aforesaid system pursuant to the present invention is executed in an automatic, or semiautomatic, manner using processing methods akin to artificial intelligence.

The present invention is especially pertinent to a human nightlife community, namely for enhancing their enjoyment of venues and for guiding them to venues which are most likely to satisfy their tastes and desires. Moreover, the present invention is also potentially capable of avoiding certain venues from becoming grossly over-subscribed such that safety issues arise, for example too many people present at a given venue such that evacuation cannot be adequately performed therefrom in an event of emergence, for example in an event of a fire or explosion incident. Moreover, data from the external database **120** is beneficially useful to fire-fighting authorities so that they are aware of concentrations of people, for example in night clubs, whereat smoking of cigarettes and joints may occur and where a risk of fire is enhanced. Furthermore, data from the external database **120** is beneficially useful to police authorities so that they are aware of concentrations of people, for example in night clubs, for coping with crowd control and similar when activities at venues get out of hand, for example brawls and similar.

The aforesaid wireless communication device **10** can be implemented in many different manners, for example using smart telephones, tablet computers including wireless interfaces, personal digital assistants (PDA's), personal computers (PC) and similar.

Modifications to embodiments of the invention described in the foregoing are possible without departing from the scope of the invention as defined by the accompanying claims. Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural. Numerals included within parentheses in the accompanying claims are intended to assist understanding of the claims and should not be construed in any way to limit subject matter claimed by these claims.

## Claims

1. An apparatus (10, 120) for sensing socially-related parameters at spatial locations, wherein the apparatus (10, 120) includes at least one wireless communication device (10) accompanying an at least one corresponding user, wherein the at least one wireless communication device (10) is coupled in communication with a database arrangement (120), wherein the apparatus (10, 120) is operable to communicate spatial location characterizing parameters from the at least one wireless communication device (10) to the database arrangement (120) for further communication therefrom to one or more other users for providing the one or more other users with a subjective status (380) of spatial locations associated with the spatial location characterizing parameters (360), **characterized in that** the at least one wireless communication device (10) includes a sensor arrangement (50) for automatically generating signals (300) from which the spatial location characterizing parameters (350) are computed, and the apparatus (10, 120) includes computing hardware (20, 120, 360) for analyzing the spatial location characterizing parameters (350) to compute the subjective status (380, "mood", "atmosphere") of the spatial locations to be communicated to the one or more other users.

2. An apparatus (10, 120) as claimed in claim 1, **characterized in that** the at least one wireless communication device (10) includes computing hardware (20) which is operable to execute one or more software products, and wherein the computing hardware (20) is thereby operable to generate the spatial location characterizing parameters (350) from the signals (300) generated by the sensor arrangement (50), wherein the spatial location characterizing parameters (350) are anonymous in respect of the signals (300) generated by the sensor arrangement (50).

3. An apparatus (10, 120) as claimed in claim 2, **characterized in that** the computing hardware (20) is operable to sample the signals (300) generated by the sensor arrangement (50) in a temporarily intermittent manner for achieving anonymity in the spatial location characterizing parameters (350).

4. An apparatus (10, 120) as claimed in claim 2, **characterized in that** the computing hardware (20) of the at least wireless communication device (10) is operable to generate the spatial location characterizing parameters (350) by applying one or more stages of Fourier analysis to the signals (300) generated by the sensor arrangement (50).

5. An apparatus (10, 120) as claimed in claim 1, **characterized in that** the subjective status (380, "mood", "atmosphere") of the spatial locations to be communicated to the one or more other users is computed from the spatial location characterizing parameters (350) by employing an analysis engine (360) based upon a neural network and/or a rule-based analysis, wherein preferably the rule-based analysis is implemented by correlation of the spatial location characterizing parameters (350) with one or more signal templates which have been *a priori* attributed with corresponding subjective status (380, "mood", "atmosphere")..

6. An apparatus (10, 120) as claimed in claim 1, **characterized in that** the at least one wireless communication device (10) includes a graphical user interface (30) coupled to computing hardware (20) of the at least one wireless communication device (10), wherein the computing hardware (20) is operable to present in operation one or more maps (100) on the graphical user interface (30) for user viewing, wherein one or more subjective status (380, "mood", "atmosphere") of spatial locations represented in the one or more maps (100) are shown on or via the one or more maps (100).

7. An apparatus (10, 120) as claimed in claim 1, **characterized in that** the signals (300) generated from the sensor arrangement (50) are representative of motion sensor signals and/or acoustic sensor signals and/or image sensor signals.

8. A method of sensing socially-related parameters at spatial locations, wherein the method employs at least one wireless communication device (10) accompanying an at least one corresponding user, wherein the at least one wireless communication device (10) is coupled in communication with a database arrangement (120), wherein the method includes:
(a) communicating spatial location characterizing parameters from the at least one wireless communication device (10) to the database arrangement (120) for further communication therefrom to one or more other users for providing the one or more other users with a subjective status (380) of spatial locations associated with the spatial location characterizing parameters (360),
**characterized in that** the method further includes:
(b) using a sensor arrangement (50) of the at least one wireless communication device (10) for automatically generating signals (300) and computing therefrom the spatial location characterizing parameters (350); and
(c) using computing hardware (20, 120, 360) for analyzing the spatial location characterizing parameters (350) to compute the subjective status (380, "mood", "atmosphere") of the spatial locations to be communicated to the one or more other users.

9. A method as claimed in claim 8, **characterized in that** the method includes using computing hardware (20) of the at least one wireless communication device (10) to execute one or more software products, thereby generating the spatial location characterizing parameters (350) from the signals (300) generated by the sensor arrangement (50), wherein the spatial location characterizing parameters (350) are anonymous in respect of the signals (300) generated by the sensor arrangement (50).

10. A method as claimed in claim 9, **characterized in that** the method includes using the computing hardware (20) to sample the signals (300) generated by the sensor arrangement (50) in a temporarily intermittent manner for achieving anonymity in the spatial location characterizing parameters (350).

11. A method as claimed in claim 9, **characterized in that** the method includes using computing hardware (20) of the at least wireless communication device (10) to generate the spatial location characterizing parameters (350) by applying one or more stages of Fourier analysis to the signals (300) generated by the sensor arrangement (50).

12. A method as claimed in claim 8, **characterized in that** the subjective status (380, "mood", "atmosphere") of the spatial locations to be communicated to the one or more other users is computed from the spatial location characterizing parameters (350) by employing an analysis engine (360) based upon a neural network and/or a rule-based analysis, wherein preferably the rule-based analysis is implemented by correlation of the spatial location characterizing parameters (350) with one or more signal templates which have been *a priori* attributed with corresponding subjective status (380, "mood", "atmosphere").

13. A method as claimed in claim 8, **characterized in that** the method includes using a graphical user interface (30) coupled to computing hardware (20) of the at least one wireless communication device (10), wherein the computing hardware (20) is operable to present in operation one or more maps (100) on the graphical user interface (30) for user viewing, wherein one or more subjective status (380, "mood", "atmosphere") of spatial locations represented in the one or more maps (100) are shown on or via the one or more maps (100).

14. A method as claimed in claim 8, **characterized in that** the signals (300) generated from the sensor arrangement (50) are representative of motion sensor signals and/or acoustic sensor signals and/or image sensor signals.

15. A software product recorded on machine-readable data storage media, **characterized in that** the software product is executable upon computing hardware (20, 120) for executing a method as claimed in one of claims 8-14.
